Europäisches Patentamt

European Patent Office

Office européen des brevets

(11) Numéro de publication: **0 218 528**
A2

# (12) DEMANDE DE BREVET EUROPEEN

(21) Numéro de dépôt: 86402150.6

(51) Int. Cl.⁴: **B 65 D 49/02**

(22) Date de dépôt: 01.10.86

(30) Priorité: 01.10.85 BR 8504832

(43) Date de publication de la demande: 15.04.87
Bulletin 87/16

(84) Etats contractants désignés: AT BE CH DE ES FR GB GR
IT LI LU NL SE

(71) Demandeur: PERTICAMPS S/A EMBALAGENS, Avenue
Presidente Castelo Branco 6201, BR-05034 Sao Paulo
SP (BR)

(72) Inventeur: Camps, Jean, 900 Avenue Rouxinol
Appartement 162, Sao Paulo (BR)

(74) Mandataire: Thibon-Littaye, Annick, Cabinet A.
THIBON-LITTAYE 11 rue de l'Etang,
F-78160 Marly-le-Roi (FR)

(54) Dispositif de blocage d'une cartouche à l'intérieur d'un goulot de bouteille.

(57) La présente invention concerne un dispositif de blocage d'une cartouche à l'intérieur d'un goulot de bouteille.

Il comporte un manchon (1), introduit dans le goulot (G), de forme tubulaire, prolongé à une extrémité supérieure par un anneau (2) s'étendant vers l'extérieur de la forme tubulaire et reposant sur l'ouverture du goulot, et à une extrémité inférieure par un mécanisme de griffes (3) rétractables, venant en position écartée, bloquer le manchon (1) contre le goulot, ledit manchon (1) constituant un organe de réception de la cartouche (6) insérée par force jusqu'à une position de blocage par des moyens d'encliquetage (5, 15) de la cartouche dans le manchon, correspondant au contact des griffes (3) contre la paroi interne du goulot (G).

ACTORUM AG

E 70011
JFL/jl
Sept 86

- 1 -

## DISPOSITIF DE BLOCAGE D'UNE CARTOUCHE A L'INTERIEUR D'UN GOULOT DE BOUTEILLE

La présente invention se rapporte aux techniques de conditionnement de cartouches munies d'un mécanisme doseur, insérées à l'intérieur d'un goulot de bouteille.

On connaît, dans les techniques de conditionnement de liquides, des dispositifs adaptables aux bouteilles ou aux flacons permettant de limiter le débit du liquide à la sortie du goulot. Il est en effet souhaitable dans certains cas de pouvoir contrôler la sortie du liquide et s'assurer qu'aucun élément extérieur ne puisse entrer dans la bouteille de manière à polluer le liquide. Il est usuel dans ces techniques d'insérer dans le goulot de la bouteille une cartouche tubulaire contenant un mécanisme doseur. La pose de ces cartouches est aisée. On insère jusqu'à présent les cartouches par force dans le goulot de manière à ce que l'extrémité supérieure de la cartouche soit située au niveau du bord supérieur du goulot de la bouteille et on positionne ensuite une capsule de fermeture sur l'ensemble.

De telles cartouches présentent un grand inconvénient. De même qu'il est très aisé de les introduire dans le goulot des bouteilles, on peut également facilement les retirer et ainsi favoriser l'introduction d'impuretés dans liquide.

La présente invention vise donc à pallier cet inconvénient en réalisant un dispositif de blocage définitif d'une cartouche munie d'un mécanisme doseur à l'intérieur d'un goulot de bouteille. Ce dispositif de blocage devra permettre une introduction facile de la cartouche dans le goulot jusqu'au positionnement de la surface supérieure de cette cartouche au niveau de l'ouverture du goulot et pouvoir maintenir cette cartouche dans cette position, sans aucune possibilité d'en être retirée. Un tel dispositif de blocage a été réalisé par l'utilisation d'un manchon introduit dans le goulot de la bouteille et reposant sur l'ouverture de ce goulot. Le blocage du manchon contre le goulot est réalisé par un mécanisme de griffes rétractables qui viennent en contact contre la paroi lorsqu'on insère la cartouche à l'intérieur du manchon et par le blocage de cette cartouche dans le manchon par un dispositif d'encliquetage.

La présente invention a donc pour objet un dispositif de blocage d'une cartouche munie d'un mécanisme doseur à l'intérieur d'un goulot de bouteille ou de flacon, caractérisé en ce qu'il comporte un manchon, introduit dans le goulot, de forme tubulaire, prolongé à une extrémité supérieure par un anneau s'étendant vers l'extérieur de la forme tubulaire et reposant sur l'ouverture du goulot, et à une extrémité inférieure par un mécanisme de griffes rétractables venant, en position écartée, bloquer le manchon contre le goulot, ledit manchon constituant un organe de réception de la cartouche insérée par force jusqu'à une position de blocage par des moyens d'encliquetage de la cartouche dans le manchon, correspondant au contact des griffes contre la paroi interne du goulot.

Par un tel dispositif de blocage on assure le positionnement définitif de la cartouche à l'intérieur d'un goulot sans aucune possibilité de pouvoir retirer cette cartouche et ainsi éviter la pollution du liquide contenu dans la bouteille.

Selon une caractéristique secondaire de l'invention, les moyens d'encliquetage assurent une position définitive d'insertion complète de la cartouche dans le goulot dans laquelle l'extrémité d'écoulement de liquide de la cartouche se trouve au niveau de l'anneau de support du manchon sur le goulot. On réalise ainsi l'introduction complète de la cartouche dans le goulot en évitant de casser, lors de mouvements de manutention, une extrémité de cartouche qui pourrait dépasser. Cette insertion complète permet le positionnement très aisé d'une capsule d'obturation de la surface d'écoulement du liquide.

Avantageusement, les moyens d'encliquetage comportent des cavités disposées à l'intérieur de la section tubulaire du manchon coopérant avec des encoches réalisées dans la cartouche, lesdits moyens d'encliquetage supprimant tout mouvement de retrait après insertion de la cartouche.

Selon une autre caractéristique secondaire de l'invention les griffes ont une épaisseur qui augmente à leurs extrémités libres de manière à diminuer le diamètre du prolongement de la forme tubulaire à un diamètre plus faible que celui de la cartouche.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

- la figure 1 est une vue latérale en coupe d'un goulot de bouteille dans lequel est placé le dispositif de blocage avec une insertion partielle de la cartouche à l'intérieur du manchon ;

- la figure 2 représente le dispositif de blocage de l'invention après l'avoir engagé jusqu'à la position définitive de la cartouche à l'intérieur du manchon.

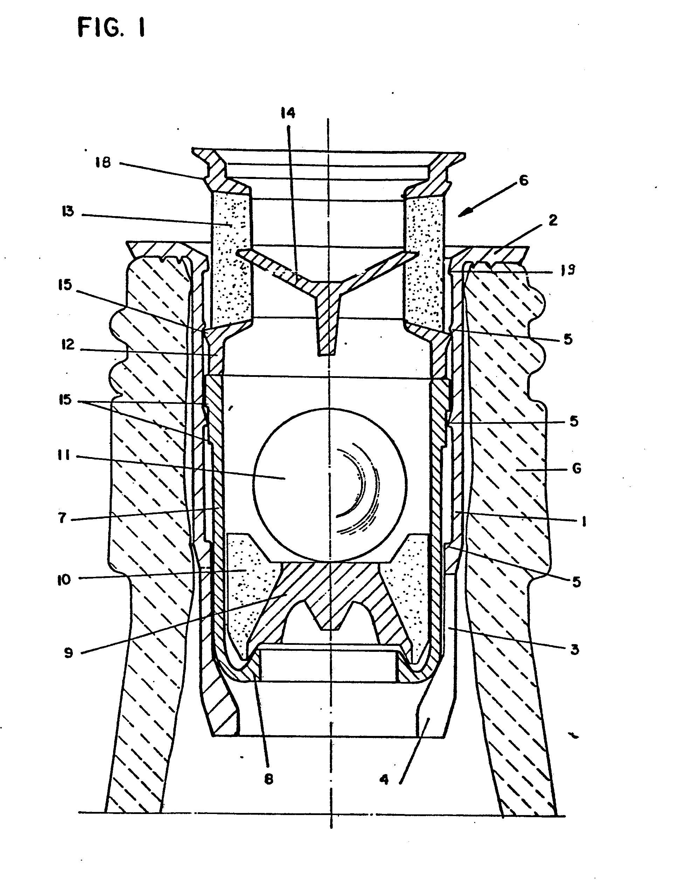

La figure 1 représente un dispositif de blocage d'une cartouche munie d'un mécanisme doseur à l'intérieur d'un goulot de bouteille. Ce dispositif comporte un manchon 1 comportant une partie centrale de forme tubulaire cylindrique. Ce manchon possède une diamètre extérieur adapté au diamètre intérieur du goulot de manière à pouvoir y être inséré. La partie centrale est prolongée à son extrémité supérieure par un anneau 2 s'étendant vers l'extérieur de la forme tubulaire et constituant un rebord extérieur destiné à reposer sur le bord du goulot G de la bouteille. De manière préférentielle l'anneau 2 sera dimensionné de manière à recouvrir parfaitement l'épaisseur du goulot. Le manchon 1 comporte à son extrémité inférieure, dans le prolongement de la forme tubulaire centrale, un mécanisme de griffes 3 rétractables pouvant s'écarter les unes des autres de manière à augmenter le diamètre de cette partie inférieure du manchon. Le mécanisme de griffes est actionné lorsqu'on introduit la cartouche 6 dont on désire le blocage en position d'utilisation. Le mécanisme de griffes 3 comporte de manière préférentielle trois griffes, qui en position de repos forment un cylindre. Chaque griffe possède une épaisseur 4, au niveau de leur fixation sur la pièce centrale, égale à celle de cette partie centrale, l'épaisseur de ces griffes augmentant vers leurs extrémités libres de manière à constituer, avant l'insertion, un diamètre interne plus faible que le diamètre extérieur de la cartouche. Lors de l'introduction de la cartouche, le diamètre intérieur du manchon diminuant sur sa partie inférieure, cette cartouche agira sur les griffes de manière à les écarter et viendra ainsi les plaquer contre les parois du goulot pour réaliser un blocage efficace.

Le dispositif de blocage selon l'invention comporte en outre des moyens d'encliquetage pour assurer un blocage définitif de la cartouche 6 dans le manchon 1, lorsque le mécanisme des griffes 3 assure le blocage du manchon contre la paroi du goulot. Ces moyens d'encliquetage comportent des aspérités 5 réalisées sur la surface intérieure de la partie centrale du manchon venant coopérer avec des encoches 15 réalisées sur la surface externe de la cartouche. Une aspérité inférieure assure un blocage de la cartouche vers le bas alors qu'une aspérité supérieure, venant dans une encoche bloquera la cartouche dans tout mouvement vers le haut.

Au niveau du prolongement de la forme tubulaire par l'anneau, le manchon comporte une excroissance 19

interne venant se positionner dans une fente 18 extérieure réalisée dans la partie supérieure de la cartouche. Lorsque cette excroissance 19 est en position dans la fente 18, la cartouche est complètement insérée dans le goulot de manière à ne pas dépasser du manchon. On évite ainsi, lors de la manutention, d'abîmer la cartouche qui pourrait éventuellement dépasser du goulot. Lorsque cette excroissance 19 est en position dans la fente 18, la surface supérieure de l'anneau coïncide avec la surface d'ouverture d'écoulement du liquide hors de la cartouche.

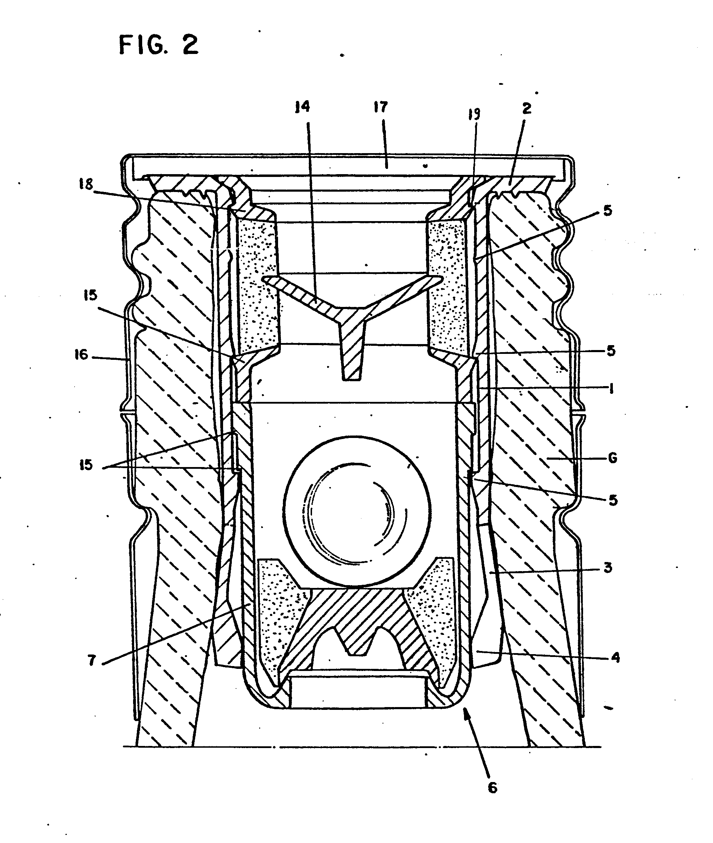

La figure 2 représente la cartouche en position bloquée à l'intérieur du goulot. L'extrémité inférieure de la cartouche, lors de l'enfoncement manuel, agit sur la surface interne des griffes de manière à progressivement les écarter et à venir en contact contre la paroi interne du goulot assurant ainsi un blocage du manchon contre le goulot. Les aspérités 5 se déplacent, lors de l'insertion, progressivement contre la paroi de la partie centrale du manchon jusqu'à rencontrer les encoches dans lesquelles elles s'engagent. L'aspérité inférieure étant venue dans l'encoche associée, elle limite tout déplacement de la cartouche vers le bas, et l'encoche supérieure coopérant avec l'encoche associée, elle assure un blocage de la cartouche dans un déplacement vertical vers le haut. Ce dispositif d'encliquetage empêchant tout mouvement vertical de la capsule, s'effectue en même temps que l'insertion de l'excroissance 19 dans la fente 18 de la partie supérieure de la cartouche.

La cartouche intérieure 6 peut présenter un nombre indifférent de pièces, pourvu que cette cartouche s'emboîte dans le manchon 1. La cartouche représentée sur les dessins annexés étant choisie à titre d'exemple, cette cartouche est composée d'une pièce inférieure tubulaire cylindrique 7, dont le bord inférieur est légèrement infléchi vers l'intérieur de façon à présenter un siège 8 à une pièce centrale 9. Cette pièce centrale mobile 9 est avantageusement nervurée en 10, sur laquelle vient prendre appui une soupape sphérique 11 également mobile. Il est aussi prévu une autre pièce cylindrique tubulaire supérieure 12 prolongée par une pièce de support d'un disque 14 faisant office de siège vis-à-vis de la soupape sphérique 11. La pièce centrale 9 ainsi que la pièce supérieure 12 présentent des encoches 5 précédemment décrites qui viennent coopérer avec les aspérités 15 de manière à maintenir fermement la cartouche 6 emboîtée dans le manchon 1.

Lorsqu'elle est livrée à des fabricants de boisson, la cartouche 6 est partiellement emboîtée dans le manchon 1, elle repose d'elle-même contre les griffes 4 et est bloquée dans un mouvement vertical par une aspérité proche de l'ouverture supérieure du manchon. La partie inférieure de la cartouche 6 coïncide avec le haut des épaississements 4 intérieurs des griffes du manchon mais sans agir sur leur écartement. On remplit la bouteille du liquide désiré, on place le dispositif manchon/cartouche dans le goulot puis on agit par force sur la partie de la cartouche dépassant du goulot. Par ce mouvement d'insertion, la partie inférieure de la cartouche a tendance à écarter les griffes jusqu'à assurer un blocage de celles-ci contre la paroi. Le dispositif d'encliquetage entrera en action lorsque la cartouche sera pratiquement complètement insérée. Après l'écartement des griffes du manchon, il n'est plus possible de retirer la cartouche intérieure 6 qui se trouve parfaitement verrouillée à l'intérieur du manchon par les moyens d'encliquetage. Ensuite on pourra éventuellement placer une capsule de fermeture filetée 16 munie intérieurement d'un disque d'étanchéité 17 de manière à obturer l'ouverture d'écoulement du liquide.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

REVENDICATIONS

1. Dispositif de blocage d'une cartouche (6) munie d'un mécanisme doseur (9,11,14) à l'intérieur d'un goulot (G) de bouteille ou de flacon, caractérisé en ce qu'il comporte un manchon (1), introduit dans le goulot (G), de forme tubulaire, prolongé à une extrémité supérieure par un anneau (2) s'étendant vers l'extérieur de la forme tubulaire et reposant sur l'ouverture du goulot, et à une extrémité inférieure par un mécanisme de griffes (3) rétractables, venant en position écartée, bloquer le manchon (1) contre le goulot, ledit manchon (1) constituant un organe de réception de la cartouche (6) insérée par force jusqu'à une position de blocage par des moyens d'encliquetage (5,15) de la cartouche dans le manchon, correspondant au contact des griffes (3) contre la paroi interne du goulot (G).

2. Dispositif selon la revendication 1, caractérisé en ce que les moyens d'encliquetage (5,15) assurent une position définitive d'insertion complète de la cartouche dans le goulot, dans laquelle l'extrémité d'écoulement de liquide de la cartouche se trouve au niveau de l'anneau de support du manchon sur le goulot.

3. Dispositif selon la revendication 1 ou 2, caractérisé en ce que le mécanisme de griffes (3) coopère avec la cartouche (6) lors de son introduction jusqu'à la position de blocage desdites griffes par leur écartement contre la paroi interne du goulot.

4. Dispositif selon l'une quelconque des revendications 1 à 3, caractérisé en ce que les moyens d'encliquetage comportent des aspérités (5) disposées à l'intérieur de la section tubulaire du manchon coopérant avec des encoches (15) réalisées dans la cartouche supprimant tout débattement vertical de la cartouche dans le manchon.

5. Dispositif selon l'une quelconque des revendications 1 à 4, caractérisé en ce qu'au niveau du prolongement de la forme tubulaire par l'anneau, le manchon comporte une excroissance (19) interne venant se positionner dans une fente (18) extérieure de la cartouche assurant une continuité de la surface externe de l'anneau avec l'ouverture d'écoulement du liquide de la cartouche.

6. Dispositif selon l'une quelconque des revendications 1 à 5, caractérisé en ce que les griffes (3) ont une épaisseur (4) qui augmente vers leurs extrémités libres de manière à diminuer le diamètre du prolongement de la forme tubulaire à une diamètre plus faible que celui de la cartouche.

7. Dispositif selon l'une quelconque des revendications 1 à 6, caractérisé en ce que, en position de blocage, une capsule (16) de fermeture est placée sur le goulot contre la surface d'écoulement du liquide de la cartouche.

FIG. 1

FIG. 2